# EUROPEAN PATENT APPLICATION

(11) **EP 4 219 055 A1**
(43) Date of publication of application: **02.08.2023**
(21) Application number: 22020025.7
(22) Date of filing: 28.01.2022
(51) Int. Cl.: B23K 9/12, B23K 9/173

(54) **CURRENT CONTACT NOZZLE WITH POINT CURRENT TRANSFER**

(71) Applicant: Linde GmbH, 82049 Pullach (DE)
(72) Inventor: Siewert, Erwan, 82049 Pullach (DE); Eichler, Stefan, 82049 Pullach (DE)
(74) Representative: Lu, Jing

(57) **Abstract**

The present invention A current contact nozzle (1) for a welding torch (100), comprising a sleeve member (10) comprising a through-opening (11) for receiving a welding wire (2), the through-opening (11) being surrounded by an inner side (10a) of the sleeve member (10), an electrical contact member (12) arranged on the inner side (10a) of the sleeve member (10), the electrical contact member (12) being configured to electrically contact the welding wire (2), a pressing element (13) being configured to mechanically contact the welding wire (2), and a spring member (14) configured to press the pressing element (13) against the welding wire (2) and therewith the welding wire (2) against the electrical contact member (12).

## Description

The present invention relates to a current contact nozzle, particularly for GMAW (gas metal arc welding), e.g. metal inert gas (MIG) or metal active gas (MAG) welding, as well as to a welding torch comprising such a current contact nozzle.

Particularly, current contact nozzles are used for GMAW. Such nozzles (which are also denoted as current contact tips) usually consist of a cylindrical copper body in which there is a bore. The welding wire (also called filler metal) is fed through this bore. The bore is slightly larger than the welding wire diameter. For different wire diameters there are correspondingly different current contact nozzles with corresponding bore diameters. Special current contact nozzles are available that offer better current transmission and/or higher abrasion resistance. Other manufacturers offer split nozzles, so that the parts can be actively pressed onto the wire.

However, standard current contact nozzles may show the following problems: Due to the movement of the wire, the bore wears out, so that the hole diameter changes. Further, the contact point is not defined and can vary along the bore, as it is a linear contact. It depends on the wear and the curvature of the welding wire. Finally, if the contact point changes, the heat balance in the welding process is altered due to a change in the stick out and the length of the arc, so that the material transfer and the welding result can change significantly.

Further, standard current contact nozzles made of a material with a higher resistance to abrasion, wear less, but may still have the problem of line contact. Special nozzles, which exert a force on the wire so that it is pressed against the copper nozzle, on the one hand increase the wear on the copper part and, on the other hand, there is also the problem of linear contact.

If the nozzle is too worn, the electrical contact is lost and high current densities lead to welding of the wire with the contact nozzle when contact is made again, thus causing a process failure.

The above stated problems are solved by a current contact nozzle having the features of claim 1. Preferred embodiments of the present invention are stated in the sub claims and are described below.

According to claim 1, a current contact nozzle for a welding torch is disclosed, comprising:
- a sleeve member comprising a through-opening for receiving a welding wire, the through-opening being surrounded by an inner side of the sleeve member,
- an electrical contact member arranged on the inner side of the sleeve member, the electrical contact member being configured to electrically contact the welding wire,
- a pressing element being configured to mechanically contact the welding wire, and
- a spring member configured to press the pressing element against the welding wire and therewith the welding wire against the electrical contact member.

According to an embodiment of the current contact nozzle, the pressing member is arranged on a first end section of an arm, the arm comprising an opposing second end section, the second end section being pivotably mounted to the sleeve member (e.g. via a shaft, particularly in form of a pin). Particularly, the arm is pivotable about a pivoting axis extending orthogonal to the respective section of the welding wire being passed through the through-opening of the sleeve member, so that the arm can be pressed against the welding wire to maintain contact to the welding wire for pressing the latter against the electrical contact member.

Further, according to an embodiment of the current contact nozzle, the pressing member is formed by a ball bearing, wherein in particular the ball bearing comprises balls arranged between an inner and an outer race, wherein preferably the outer race forms the pressing element.

Furthermore, in an embodiment, the pressing member is a rotatable shaft, wherein in particular the rotatable shaft is rotatable with respect to said arm.

Further, according to an embodiment of the current contact nozzle, the pressing member is rotationally fixed with respect to said arm.

Further, according to an embodiment of the current contact nozzle, the spring member is configured to press the arm towards the welding wire so as to press the pressing member against the welding wire and therewith the welding wire against the electrical contact member.

Furthermore, in an embodiment, the spring member is one of: rubber band; a PTFE (e.g. Teflon) hose; a spring in form of an open ring (i.e. the ring comprises a gap allowing the ring to be pre-loaded).

Further, in an embodiment, the spring member is configured to generate a spring force that is oriented radially inwards and that causes the pressing member to press the welding wire against the electrical contact member.

Further, according to an embodiment of the current contact nozzle, the current contact nozzle comprises a protection sleeve configured to surround the pressing member and said arm

Further, according to an embodiment of the current contact nozzle, the protection sleeve is configured to be screwed to the sleeve.

Furthermore, according to yet another embodiment of the present invention, the current contact nozzle comprises a first and an opposing second electrically insulating tube, to insulate the inner side of the sleeve member with respect to the welding wire, wherein the electrical contact member and the pressing member are arranged between the first and the second electrically insulating tube.

Further, in an embodiment, the current contact nozzle is configured to be connected (particularly via a thread) to a welding torch, particularly for GMAW (gas metal arc welding) in a releasable fashion.

According to yet another aspect of the present invention, a welding torch is disclosed, particularly for GMAW, the welding torch comprising a current contact nozzle according to the present invention.

According to a further aspect of the present invention, the current contact nozzle according to the present invention can be used for GMAW, as well as for submerged arc welding.

According to yet another aspect, the current contact nozzle can be used for TIG and plasma welding, particularly for feeding the welding filler metal as a hot wire, as well as for the GMAW and submerged arc process when feeding an additional wire as a hot wire.

According to a preferred embodiment, the wire is electrically heated using a further current contact point (so-called Joule torch).

Preferably, the current contact nozzle (e.g. in a welding torch) is used in combination with a cleaning device, e.g. to remove abrasion or contamination of the welding in a safe manner. Here, a gas flow can be used to blow or suck off solid abrasions and gaseous evaporations continuously or discontinuously. The cleaning device may be integrated into the current contact nozzle or may be a separate assembly and part of a device such as a welding torch or a system for welding, which system (e.g. welding torch) also comprises the current contact nozzle according to the present invention.

Furthermore, particularly when using the current contact nozzle in a welding torch, the welding wire can be cleaned mechanically before entering the current contact nozzle.

In the following, embodiments of the present invention as well as further features and advantages shall be explained with reference to the Figures, wherein
- Fig. 1: shows a perspective view of an embodiment of a current contact nozzle according to the present invention;
- Fig. 2: shows a cross sectional view of the current contact nozzle of Fig. 1, and
- Fig. 3: shows a schematic illustration of a welding torch comprising a current contact nozzle according to the present invention.

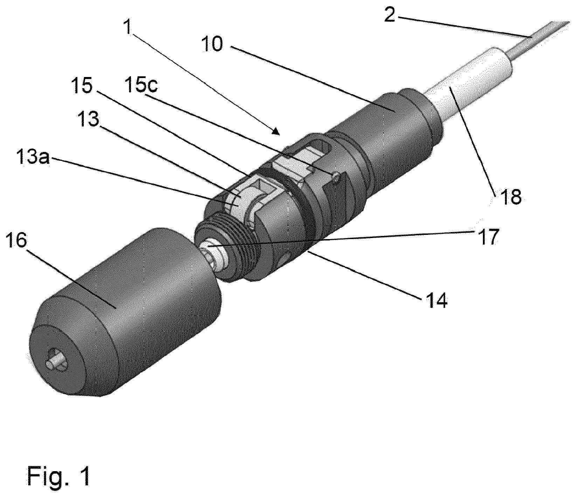

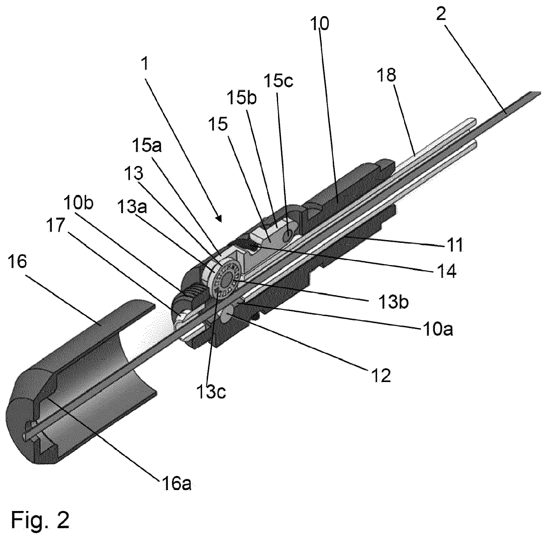

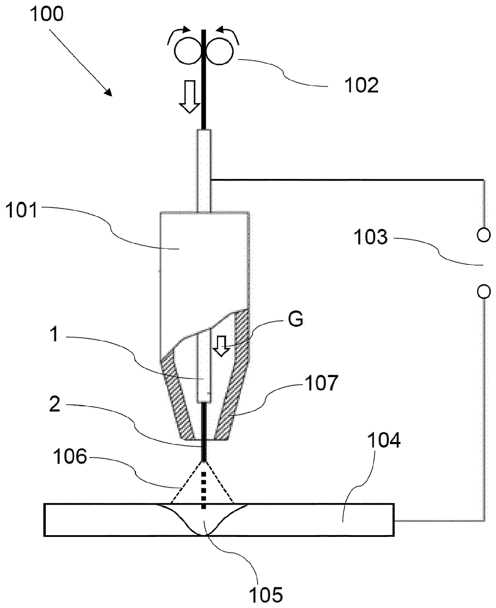

The present invention very precisely defines the current contact point by providing a current contact nozzle 1, particularly as shown in Figs. 1 and 2. According thereto, the current contact nozzle 1 comprises a sleeve member 10 comprising an elongated through-opening 11 extending along a longitudinal axis of the current contact sleeve for receiving a welding wire 2, wherein the through-opening 11 is defined by an inner side 10a of the sleeve member 10. The nozzle 1 further comprises an electrical contact member 12 arranged on the inner side 10a of the sleeve member 10, the electrical contact member 12 being configured to electrically contact the welding wire 2. Further, the current contact nozzle 1 comprises a pressing element 13 being configured to mechanically contact the welding wire 2, and a spring member 14 configured to press the pressing element 13 against the welding wire 2 and therewith the welding wire 2 against the electrical contact member 12. Particularly, the pressing member 13 and the electrical contact member 12 are arranged on opposite sides of the welding wire 2 that is guided through said through-opening 11 of the current contact nozzle 1.

Due to the specific design of the current contact nozzle 1, a jumping of the current contact point is avoided. This results in a very constant process. In addition, welding of the welding wire 2 to the nozzle 1 can no longer occur.

At the electrical contact member 12 providing a point contact to the welding wire 2, there is a relative movement between the electrical contact member 12 and the welding wire 2. To prevent wear, this electrical contact member 12 is preferably made out of a very hard material with an extremely high abrasion resistance. For instance, tungsten has proven to be particularly advantageous as a material of the electrical contact member 12. In an embodiment, the electrical contact member 12 is arranged transversely to the direction of the welding wire feed, so that a point-shaped contact is created. Particularly, the electrical contact member 12 can be shaped as a cylindrical rod 12.

Particularly, the electrical contact member 12 is connected to the sleeve member 10, which can be a cylindrical copper base body, so that it protrudes from the inner side 10a of the sleeve member 10 towards the welding wire when the latter is fed through the through-opening 11 of the current contact nozzle 1.

Particularly, the electrical contact member 12 can be connected to the sleeve member 12 / base body 12 by means of a press fit. Alternatively, both components can also be welded, back-cast or brazed. The joining method results in low current transfer resistance and a large surface area, so that very high currents can be transmitted. The sleeve member / cylindrical copper base body 10 is connected to a welding current source 103 (cf. Fig. 3), particularly via the welding torch 100 and a hose assembly (not shown).

To ensure contact between the electrical contact member 12 (e.g. tungsten rod) and the welding wire 2, the welding wire 2 is pressed against the electrical contact member 12. Here, a pressing element 13 that does not generate any relative movement between the welding wire 2 and itself, has proven to be particularly advantageous (e.g. a ball bearing 13, rotating shaft or similar). The pressing element 13 is pressed against the welding wire 2 by a component 14, particularly spring member 14, which generates a force. A rubber band, a PTFE (e.g. Teflon) hose, a ring-shaped spring member, or a similar structure can be used. Preferably a ring-shaped spring member 14 made of a temperature-resistant material is used. The spring member 14 generates a spring force radially inwards that presses the pressing element 13 against the welding wire. Particularly, the pressing element 13 is a ball bearing comprising an outer race 13a that contacts the welding wire and an inner race 13b, wherein balls 13c of the ball bearing 13 are arranged between the two races 13a, 13b.

In order to accommodate the above-described structure in a small installation space, the ball bearing 13 is connected to an end section 15a of an arm 15 that is connected at an opposing end section 15b via a shaft 15c (e.g. pin) to the sleeve member 10 and is movable towards the welding wire 2 by the spring member 14. The outer race 13a of the ball bearing 13, which is in contact with the welding wire 2, is electrically insulated from the inner race 13b by ceramic balls 13c. This ensures that no welding current can flow over the ball bearing 13 and destroys it.

Alternatively, instead of the ball bearing 13, a rigid element 13 can also be used, which is preferably made from a hard, durable material (particularly abrasive resistant material), so that the relative movement between the pressing member 13 and the welding wire 2 does not cause any significant wear. Here, too, it is advantageous if no current flows via the rigid element 13 by electrically insulating it.

The arm 15 and ball bearing 13 are protected by a protection sleeve 16 from spatter, the strong arc radiation and from the heat of the process. This protection sleeve 16 covers arm 15 and pressing member 13 and can be plugged or screwed to the sleeve member 10. Particularly the protection sleeve 16 can comprise an inner thread 16a into which an outer thread 10b of the sleeve member 10 can be screwed. The protection sleeve 16 creates a steady outer geometry so that the shielding gas flow is not affected.

Furthermore, on both sides of the contact member 12 and pressing element 13, electrical contact between the sleeve member 12 / copper body 12 and the welding wire 2 is avoided by electrically insulating tubes 17, 18 which are inserted into the through-opening. These tubes 17, 18 particularly consist of a ceramic material.

Furthermore, the current contact nozzle 1 can be connected to the welding torch 100 by means of a thread, as is the case with conventional contact nozzles, so that this special nozzle 1 can be used with any welding torch 100, requires no modification and leads to a significant increase in quality and productivity with little investment.

Fig. 3 shows a schematic example of the use of the current contact nozzle 1 according to the present invention with a welding torch 100. The welding torch guides the welding wire through the current contact nozzle which is electrically connected to a welding current source 103 so that welding current can flow between wire and welding current source 103 via current contact member 12 (cf. Fig. 2). The welding current source 103 is further connected to at least one workpiece 104 to generate an arc 106 between an end of the welding wire 2 protruding out of the current contact nozzle 1 and the at least one workpiece 104 to generate a weld pool 105, wherein material from the welding wire 2 is injected into the weld pool 105. A shielding gas G is discharged from a shielding gas nozzle 107 of the welding torch 100 onto the weld pool 105 to protect the latter against oxidation. The welding wire 2 can be fed through the welding torch 100 and current contact nozzle 1 by means of a suitable actuator 102.

The present invention advantageously allows to realize a defined electrical point contact between current contact nozzle and welding wire, significantly reduces wear, guarantees a constant contact pressure, and achieves a small design / size.

These characteristics generate corresponding advantages during the welding process, namely less spatter, long firing times (also being called arc on time) and thus high economic efficiency, constant conditions (thus higher quality and less scrap), no sticking of the welding wire (and thus no unplanned downtimes), nevertheless good accessibility and good shielding gas coverage.

## Claims

1. A current contact nozzle (1) for a welding torch (100), comprising
- a sleeve member (10) comprising a through-opening (11) for receiving a welding wire (2), the through-opening (11) being surrounded by an inner side (10a) of the sleeve member (10),
- an electrical contact member (12) arranged on the inner side (10a) of the sleeve member (10), the electrical contact member (12) being configured to electrically contact the welding wire (2),
- a pressing element (13) being configured to mechanically contact the welding wire (2), and
- a spring member (14) configured to press the pressing element (13) against the welding wire (2) and therewith the welding wire (2) against the electrical contact member (12).

2. The current contact nozzle according to claim 1, wherein the pressing member (13) is arranged on a first end section of an arm (15), the arm (15) comprising an opposing second end section (15b), the second end section (15b) being pivotably mounted to the sleeve member (10).

3. The current contact nozzle according to one of the preceding claims, wherein the pressing member (13) is formed by a ball bearing.

4. The current contact nozzle according to one of the preceding claims, wherein the pressing member is a rotatable shaft, wherein in particular the rotatable shaft is rotatable with respect to said arm.

5. The current contact nozzle according to claim 2, wherein the pressing member is rotationally fixed with respect to said arm.

6. The current contact nozzle according to claim 2 or according to one of the claims 3 to 5, insofar referring to claim 2, wherein the spring member (14) is configured to press the arm (15) towards the welding wire (2) so as to press the pressing member (13) against the welding wire (2) and therewith the welding wire (2) against the electrical contact member (12).

7. The current contact nozzle according to one of the preceding claims, wherein the spring member (14) is one of: a rubber band; a PTFE hose; a spring in form of an open ring.

8. The current contact nozzle according to one of the preceding claims, wherein the spring member (14) is configured to generate a spring force that is oriented radially inwards.

9. The current contact nozzle according to claim 2 or one of the claims 3 to 8, insofar referring to claim 2, wherein the current contact nozzle (1) comprises a protection sleeve (16) configured to surround the pressing member (13, 13a) and said arm (15).

10. The current contact nozzle according to claim 9, wherein the protection sleeve (16) is configured to be screwed to the sleeve member (10).

11. The current contact nozzle according to one of the preceding claims, wherein the current contact nozzle (1) comprises a first and an opposing second electrically insulating tube (17, 18), to insulate the inner side (10a) of the sleeve member (10) with respect to the welding wire (2), wherein the electrical contact member (12) and the pressing member (13, 13a) are arranged between the first and the second electrically insulating tube (17, 18).

12. The current contact nozzle according to one of the preceding claims, wherein the current contact nozzle (1) is configured to be connected to a welding torch (100), in a releasable fashion.

13. A welding torch (100), particularly for GMAW, the welding torch (100) comprising a current contact nozzle (1) according to one of the preceding claims.

14. The welding torch according to claim 13, wherein the welding torch further comprises a cleaning device configured to remove a contamination of the welding wire.

15. The welding torch according to claim 14, wherein the cleaning device is configured to at least one of: blow out contaminations, suck off contaminations, mechanically clean the welding wire before the welding wire enters the current contact nozzle.
